# EUROPEAN PATENT APPLICATION

(11) **EP 2 259 577 A1**
(43) Date of publication of application: **08.12.2010**
(21) Application number: 10005652.2
(22) Date of filing: 31.05.2010
(51) Int. Cl.: H04N 5/445, G06T 7/00, G06K 9/00, H04H 60/29, H04H 60/56, H04H 20/12

(54) **Methods and apparatus to monitor a multimedia presentation including multiple content windows**

(30) Priority: 29.05.2009 US 474906
(71) Applicant: The Nielsen Company (US), LLC, Schaumburg, IL 60173 (US)
(72) Inventor: Zhang, Min, Lutz, Florida 33558 (US); Cooper, Scott, Tarpon Springs, FL 34688 (US); Turnbow, Doug, Odessa, FL 33556 (US)
(74) Representative: Samson & Partner

(57) **Abstract**

Methods and apparatus to monitor a multimedia presentation including multiple content windows are disclosed. An example method to monitor a media device providing a media presentation capable of including a plurality of content windows disclosed herein comprises obtaining a monitored image corresponding to the media presentation provided by the media device, determining a parameter value representative of at least one of a luminance or a chrominance of a region in the monitored image, a shape of the region representative of at least one of the plurality of content windows, and comparing the parameter value to a highlight threshold to determine whether a content window associated with a location of the region in the monitored image is highlighted.

## Description

### FIELD OF THE DISCLOSURE

This disclosure relates generally to monitoring multimedia presentations and, more particularly, to methods and apparatus to monitor a multimedia presentation including multiple content windows.

### BACKGROUND

Many broadband cable and satellite service providers are now offering interactive solutions that allow viewers to simultaneously view and interact with multiple content windows included in a single multimedia content presentation. In an example interactive television (TV) solution, each content window can be individually configured to present content provided by a particular broadcast network or viewer navigation menus for other interactive services. For example, subscribers to direct broadcast satellite (DBS) services provided by DISH Network^{®} can select the DISH home portal channel that enables navigation through each of six video content windows included in a multi-window video display mosaic. Window navigation is accomplished using the directional arrows of a remote control. As a viewer navigates through different windows of the multi-window video display presenting network media content, the audio presentation changes to correspond to the particular window that has been highlighted by the viewer. When a highlighted window presenting network media content is subsequently selected for viewing, full-screen video and audio corresponding to the selected network media content are presented. However, when a viewer navigates to and highlights a window presenting some other non-audio interactive application, the audio remains on the last highlighted window presenting network media content. The DISH home portal channel can be accessed in many ways, including but not limited to, tuning to a predefined channel (e.g., channel 100), pressing an interactive TV button on a remote control, launching the home portal channel from an electronic program guide (EPG) and selecting a triggered advertisement on another channel.

### BRIEF DESCRIPTION OF THE DRAWINGS

FIG. 1 is a block diagram of an example media content monitoring system capable of implementing the media content monitoring techniques described herein.

FIG. 2 is a block diagram of an example monitoring unit capable of monitoring multimedia presentations including multiple content windows, and which may be used to implement the example media content monitoring system of FIG. 1.

FIG. 3 depicts a first example set of predefined regions of interest that may be used by the example monitoring unit of FIG. 2 to determine whether a content window included in a monitored multimedia presentation is highlighted.

FIG. 4 depicts a second example set of predefined regions of interest that may be used by the example monitoring unit of FIG. 2 to determine whether a content window included in a monitored multimedia presentation is highlighted.

FIG. 5 depicts an example set of templates that may be used by the example monitoring unit of FIG. 2 to determine whether a content window included in a monitored multimedia presentation is highlighted.

FIG. 6 is a block diagram of an example highlighted window detector that may be used to implement the example monitoring unit of FIG. 2.

FIG. 7 is a flowchart representative of example machine readable instructions that may be executed to perform an example configuration procedure to implement the example monitoring unit of FIG. 2.

FIG. 8 is a flowchart representative of example machine readable instructions that may be executed to perform an example monitoring procedure to implement the example monitoring unit of FIG. 2.

FIGS. 9A-9B collectively form a flowchart representative of example machine readable instructions that may be executed to perform an example highlighted window detection procedure to implement the example machine readable instructions of FIG. 8 and/or the example monitoring unit of FIG. 2.

FIG. 10 is a block diagram of an example computer system that may store and/or execute the example machine readable instructions of FIGS. 7, 8 and/or 9A-9B to implement the example monitoring unit of FIG. 2.

### DETAILED DESCRIPTION

Methods and apparatus to monitor a multimedia presentation including multiple content windows are disclosed herein. In an example disclosed herein, a method to monitor an example media device providing a media presentation capable of including a plurality of content windows comprises obtaining a monitored image corresponding to the media presentation provided by the media device. The example method also comprises determining a first parameter value representative of at least one of a luminance or a chrominance of a first region in the monitored image, wherein a shape of the first region is representative of at least one of the plurality of content windows. Furthermore, the example method comprises comparing the first parameter value to a highlight threshold to determine whether a first content window associated with a location of the first region in the monitored image is highlighted.

In another example disclosed herein, a machine readable article of manufacture stores machine readable instructions which, when executed, causes a machine to obtain a monitored image corresponding to a media presentation provided by a media device, wherein the media presentation is capable of including a plurality of content windows. Execution of the example stored machine readable instructions also causes the example machine to determine a first parameter value representative of at least one of a luminance or a chrominance of a first region in the monitored image, wherein a shape of the first region is representative of at least one of the plurality of content windows. Furthermore, execution of the example stored machine readable instructions causes the example machine to compare the first parameter value to a highlight threshold to determine whether a first content window associated with a location of the first region in the monitored image is highlighted.

In yet another example disclosed herein, a media device monitoring unit comprises an example video interface communicatively coupled to at least one of a camera or a video output of an example media device to obtain a monitored image corresponding to a media presentation provided by the media device, wherein the media device is capable of including a plurality of content windows in the media presentation. The example media device monitoring unit also comprises an example highlighted window detector communicatively coupled to the example video interface and operative to determine a first parameter value representative of at least one of a luminance or a chrominance of a first region in the monitored image, wherein a shape of the first region is representative of at least one of the plurality of content windows. Additionally, the example highlighted window detector is operative to compare the first parameter value to a highlight threshold to determine whether a first content window associated with a location of the first region in the monitored image is highlighted. Furthermore, the example media device monitoring unit comprises an example configuration interface to specify at least one of a template corresponding to a shape of at least one of the plurality of content windows or a plurality of regions of interest corresponding respectively to the plurality of content windows. In an example implementation, the highlighted window detector is operative to determine the first region in the monitored image using at least one of the template or the plurality of regions of interest specified by the example configuration interface.

Many existing media content monitoring techniques perform content monitoring by processing video and/or audio signals assumed to represent only a single media content presentation. In contrast, the example media content monitoring techniques described herein determine viewer interaction with a multimedia presentation including multiple content windows by detecting which content window (e.g., such as which content presentation or display region) of the multi-window multimedia presentation is currently highlighted by the viewer. Generally, a viewer is able to highlight a particular content window by navigating to or otherwise initially selecting the window (or, for example, a label or other identifier associated with the window), thereby causing the selected content window (or label, etc.) to be highlighted relative to the other content window(s) (or label(s), etc.) in the multi-window multimedia presentation. As such, the example media content monitoring techniques described herein are able to passively and non-invasively process a monitored image (e.g., such as captured video frames) corresponding to the multi-window multimedia presentation and use luminance and/or chrominance information included in the monitored image to determine which content window (e.g., such as which content presentation or display region) is highlighted by a viewer.

In a further example implementation of the media content monitoring techniques described herein, an example monitoring unit is configured to monitor a media device capable of providing a multimedia presentation including multiple, selectable content windows in known locations of the multimedia presentation. At least some of the content windows are capable of being highlighted by a viewer. In such an example, the monitoring unit is configured or trained with predefined regions of interest in the multimedia presentation corresponding to the known locations of the multiple content windows capable of being highlighted by a viewer. Additionally or alternatively, the predefined regions of interest can correspond to identification regions in the multimedia presentation labeling each content window and that can be highlighted by a viewer to select the corresponding content window.

After being configured with the predefined regions of interest, the example monitoring unit captures and digitizes, or otherwise obtains, a video frame (or, in other words, an image) representative of the monitored multimedia presentation. The example monitoring unit then analyzes the luminance and/or chrominance information associated with each predefined region of interest of the monitored video frame (or monitored image) to determine whether one or more of the associated content windows are being highlighted by the viewer. For example, when a content window is highlighted, the region of the multimedia presentation corresponding to the highlighted window exhibits luminance and chrominance levels that are typically consistent and high throughout most, if not all, of the region. Therefore, in this example, if the luminance and/or chrominance in a particular region of interest of the monitored video frame (or monitored image) meets certain criteria (e.g., such as if the luminance for a particular predefined region of interest is above a threshold and greater than the luminances associated with the other predefined regions of interest), the content window associated to the particular region of interest is determined to be highlighted by the viewer.

In another example implementation, the example monitoring unit is additionally or alternatively configured to monitor a media device capable of providing a multimedia presentation including multiple, selectable content windows in possibly unknown (as well as known) locations of the multimedia presentation. In such an example, the monitor unit is configured with a set of templates (e.g., such as in the form of binary images, data specifying shapes and/or sizes of image regions, data specifying pixel boundaries of image regions, etc.) representative of the shape(s) of all possible highlighted content windows and/or identification regions in the monitored multimedia presentation. During operation, the example monitoring unit captures and processes, or otherwise obtains, a monitored video frame (or, in other words, a monitored image) representative of the monitored multimedia presentation. The example monitoring unit then compares the monitored video frame (or monitored image) to the set of templates to identify a match between a highlighted content window (if present) and one or more of the templates.

Various digital image processing and matching techniques, such as binarization, correlation, etc., may be used to compare the monitored video frame (or monitored image) with the set of templates. For example, digital image binarization involves converting a color or gray scale image into a binary (e.g., black-and-white) image, and digital image correlation provides a measure of association (resemblance) between two digital images to determine whether the two images match. In a particular example implementation, the monitor unit captures, digitizes and binarizes a video frame corresponding to the monitored multimedia presentation to obtain a binary monitored image representative of the monitored multimedia presentation. The example monitoring unit then shifts some or all of the configured templates across the binary monitored image in both horizontal and vertical directions (or otherwise selects locations (e.g., pixel locations) and regions (e.g., pixel boundaries) of the binary monitored image for comparison with the configured template(s)) to determine whether any of the templates yield a match at any location in the binary monitored image. If a match is found, the location of the match and the particular template yielding a match are used to indicate that a content window in the monitored multimedia presentation has been highlighted by the viewer.

After determining whether and which content window has been highlighted by the viewer, at least some of the example monitoring techniques described herein operate to identify the media content presented in the highlighted content window. For example, each content window may be pre-assigned to a particular broadcast channel or, more generally, content source. In such an example, identifying the highlighted content window also uniquely identifies the content source. Additionally or alternatively, optical character recognition (OCR) and/or logo detection can be used to process the content presented in the highlighted content window to obtain identification information (e.g., such as a broadcast channel number, name, logo, etc.) that can be used to identify the source of the content presented in the highlighted content window. Audio codes/signatures determined from an audio signal emitted by the media device being monitored, and/or video codes/signatures determined from a video signal emitted by the media device, can also be used to identify the content presented in the highlighted content window of the monitored multimedia presentation.

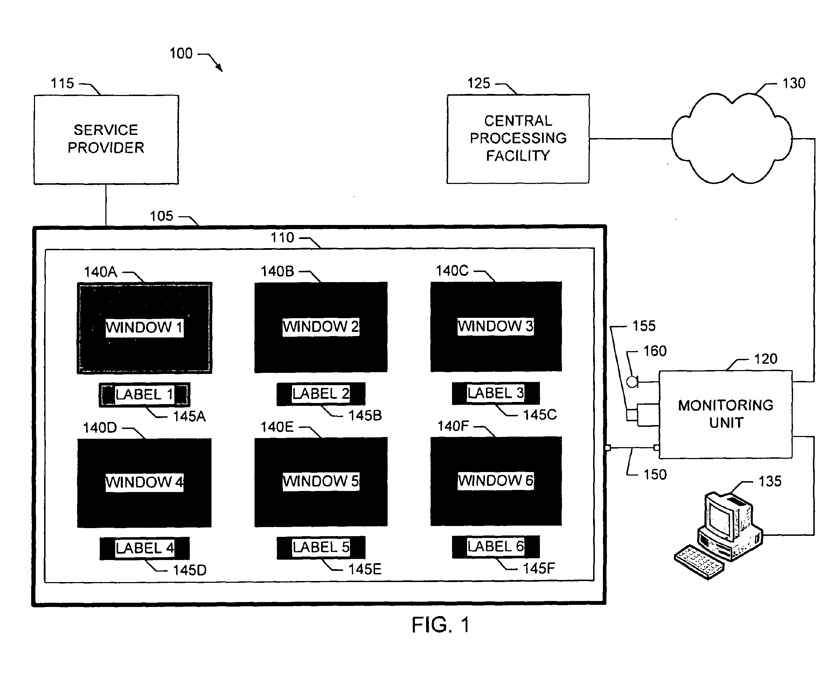

Turning to the figures, a block diagram of an example media content monitoring system 100 capable of implementing the media content monitoring techniques described herein is illustrated in FIG. 1. The example media content monitoring system 100 includes an example media device 105 configured to present an example multimedia presentation 110 using media content received from an example service provider 115. The example media content monitoring system 100 also includes an example monitoring unit 120 configured to monitor the example multimedia presentation 110 provided by the example media device 105. The example media content monitoring system 100 further includes an example central processing facility 125 in communication with the example monitoring unit 120 via an example network 130 and configured to receive monitored data determined by the monitoring unit 120. Additionally, at least some example implementations of the media content monitoring system 100 include an example configuration terminal 135 to allow local configuration of the example monitoring unit 120. Additionally or alternatively, at least some example implementations allow remote configuration of the example monitoring unit 120 via the example central processing facility 125 and the example network 130. Additionally or alternatively, in at least some example implementations, the example monitoring unit 120 can be configured to cause the example media device 105 to present one or more configuration windows, with the example monitoring unit 120 to receive input configuration data from, for example, a remote control or other input device.

Examining FIG. 1 in greater detail, the example service provider 115 operates as an input to the example media content monitoring system 100 and can be implemented by any type service provider, such as a broadcast cable television service provider, a satellite television service provider (e.g., such as the DISH Network), a direct satellite feed, a radio frequency (RF) television service provider, an Internet service provider; an Internet streaming video/audio provider (e.g., such as Netflix, Inc.), a video-on-demand (VOD) provider, etc. Additionally or alternatively, the example service provider 115 can be replaced or augmented by one or more local media content sources, such as a digital versatile disk (DVD) player, a video cassette recorder (VCR), a video game console, a digital video recorder (DVR), etc. Furthermore, the example service provider 115 can be implemented by any combination of any number of service providers and/or any number of local media content sources, such as those previously described.

The example media device 105 can be implemented by any type of media device, such as television, a set top box (STB), a multimedia computer system, a multimedia-capable mobile phone, a personal digital assistant (PDA), etc. Furthermore, in some example implementations, the example media device 105 may be coupled to, or integrated with, one or more local media content sources, such as those mentioned above in the description of the example service provider 115. More generally, the example media device 105 can be implemented by any type of media device capable of processing media content to provide a multimedia presentation including multiple content areas or windows, such as the example multimedia presentation 110 of the illustrated example. As such, the example media device 105 may correspond to a device capable of presenting (e.g., displaying) a multi-window multimedia presentation, such as a television, or the example media device 105 may correspond to a device, such as a STB, capable of providing the multi-window multimedia presentation to another device, such as a television, for presentation.

In the illustrated example, the example media device 105 is capable of providing the example multimedia presentation 110, which includes six (6) media content windows 140A-F and six (6) associated identification labels 145A-F. The example media device 105 may provide the example multi-window multimedia presentation 110 continuously. Additionally or alternatively, example media device 105 may provide the example multi-window multimedia presentation 110 only under certain operating conditions, such as when the media device 105 is tuned to a particular channel, configured to operate in a particular presentation/display mode, configured to execute a particular multimedia presentation application, etc. Although the illustrated example multimedia presentation 110 includes six (6) content windows, the example monitoring techniques described herein support a multi-window multimedia presentation including any number of content windows. Furthermore, each of the content windows included in a multi-window multimedia presentation could be any type of display window, region, banner, menu, etc., with or without borders. Also, each content window in a multi-window multimedia presentation is generally associated with a different media source. For example, a first content window could have a first broadcast channel provided by the service provider 115 as its source, whereas a second content window could have menu display data provided by the service provider 115 or generated by the media device 105 as its source. In another example, the second content window could have second broadcast channel provided by the service provider 115 as its source. In yet another example, the second content window could obtain its input from a local media content source. The preceding examples are merely illustrative and not meant to be limiting.

As a first illustrative example, the example service provider 115 may correspond to the DISH Netyvork^{®} direct broadcast satellite service and the media device 105 may correspond to a media device capable of receiving and presenting media content received via the DISH Network^{®} direct broadcast satellite service. In such an example, the multimedia presentation 110 presented by the example media device 105 could correspond to presentation of the DISH home portal channel. The example media device 105 can access the DISH home portal channel in many ways, including but not limited to, tuning to a predefined channel (e.g., channel 100), pressing an interactive TV button on a remote control (not shown), launching the home portal channel from an electronic program guide (EPG), selecting a triggered advertisement on another channel, etc..

As shown in the illustrated example, the DISH home portal channel provides six (6) video content windows 140A-140F for inclusion in the multimedia presentation 110, resulting in a multi-window video display mosaic being displayed by the example media device 105. Each content window 140A-140F can be individually configured to present content provided by a particular broadcast network carried by the DISH Network^{®} direct broadcast satellite service or viewer navigation menus for other interactive services. Navigation through each of the six (6) video content windows 140A-140F is accomplished using the directional arrows of a remote control (not shown). As a viewer navigates to a particular video content window 140A-140F of the multimedia presentation 110, the selected video content window is highlighted. For example, the example multimedia presentation 110 depicts the first content window 140A as being highlighted (along with the first information label 145A also being highlighted).

In the example of the DISH home portal channel, when a viewer highlights a particular video content window 140A-140F and the highlighted content window presents media content, the audio signal output by the example media device 105 corresponds to the media content presented in the highlighted content window. For example, if the highlighted first content window 140A of the illustrated example is presenting media content provided by a particular broadcast network carried by the DISH Network^{®}, the audio signal output by the example media device 105 changes to correspond to the network media content presented in the highlighted first content window 140A. When a highlighted content window presenting network media content (e.g., such as the first content window 140A) is subsequently selected again for viewing, full-screen video and audio corresponding to the selected network media content are presented. However, when a viewer navigates to and highlights a content window 140A-140F presenting some other non-audio interactive application (e.g., such as an interactive program guide), the audio output by the example media device 105 will correspond to the last highlighted window presenting network media content. For example, if a viewer highlights a second content window presenting an interactive program guide after having previously highlighted a first content window presenting a broadcast program with audio content, the media device 105 will continue to output the audio corresponding to the broadcast program presented in the first content window even through the second content window presenting the interactive program guide is now highlighted. As such, monitoring of only the audio output by the example media device 105 may not be sufficient to accurately identify which content window 140A-F included in the example multimedia presentation 110 has been highlighted by a viewer because the presented audio does not necessarily correspond to the highlighted content window in all cases.

As a second illustrative example, the example service provider 115 may correspond to an Internet service provider and/or one or more Internet streaming video/audio providers, and the media device 105 may correspond to a multimedia computer system, a multimedia-capable mobile phone, a PDA, etc. In such an example, the multimedia presentation 110 presented by the example media device 105 could correspond to multiple media content windows 140A-F being opened for presenting multiple respective media content presentations. For example, each content window 140A-F can be opened and configured to present different streaming or downloaded audio/video content. In such an example, the viewer can use an input device, such as a mouse, pointer, etc. (not shown) to highlight which of the multiple content windows 140A-F is active.

As indicated by the preceding examples, each of the media content windows 140A-F included in the example multimedia presentation 110 provided by the example media device 105 of FIG. 1 can present any type of media content, including but not limited to, broadband audio/video content, streaming audio/video content, audio/video content presented from downloaded files, images, menus, graphics, etc. The identification labels 145A-F can include any type of identification information, such as a broadcast channel number, a channel name, a program name, a file name, a website, a logo, etc., corresponding to the media content presenting in the corresponding media content windows 140A-F. As discussed in the preceding examples, each of the media content windows 140A-F included in the example multimedia presentation 110 can be highlighted by a viewer to allow the viewer to interact with the example multimedia presentation 110 provided by the example media device 105. In an example implementation, when a viewer selects a particular media content window, the selected content window (or at least a substantial portion thereof) is highlighted. For example, when a content window is highlighted, the region of the multimedia presentation corresponding to the highlighted window exhibits luminance and/or chrominance levels (or other image characteristics, such as texture, shading, etc.) that are substantially different from (e.g., higher than, lower than, etc.) the region(s) of the multimedia presentation corresponding to the other content window(s). For example, in FIG. 1 the first media content window 140A is depicted as being highlighted by a viewer. Additionally or alternatively, when a viewer selects a particular media content window, the identification label (or at least a substantial portion thereof) associated with the selected content window is highlighted. For example, in FIG. 1 the first identification label 145A associated with the first content window 140A is depicted as also being highlighted by a viewer.

To monitor the example multimedia presentation 110 provided by the example media device 105, the example media content monitoring system 100 includes the example monitoring unit 120. Unlike many, if not all, conventional media content monitors, the example monitoring unit 120 is capable of monitoring the example multimedia presentation 110 and determining which one or more of the multiple content windows 140A-F have been highlighted by a viewer. Additionally, in at least some example implementations, the monitoring unit 120 is capable of identifying the particular media content presented in a particular content window 140A-F determined to have been highlighted. Furthermore, in at least some example implementations, the monitoring unit 120 is capable of determining whether the monitored media device 105 has been tuned to a particular channel or otherwise specifically configured to present the example multimedia presentation 110 including the multiple content windows 140A-F.

In the illustrated example, the monitoring unit 120 includes a video signal input 150 to accept a video signal output by the example media device 105. Additionally or alternatively, the monitoring unit 120 of the illustrated example includes a camera 155 (e.g., such as a video camera or a still camera) positionable to capture images corresponding to a display of the media device 105. Although depicted as including the example video signal input 150 and the example camera 155, the example monitoring unit 120 can include any type of sensor capable of receiving, detecting and/or otherwise processing the example multimedia presentation 110 provided by the example media device 105. Inclusion of the example video signal input 150 and/or the example camera 155 (and/or any other appropriate sensor) in the example monitoring unit 120 allows the monitoring unit 120 to monitor the example multimedia presentation 110 provided by the example media device 105 noninvasively (i.e., without modification of the example media device 105).

For example, as described in greater detail below, the monitoring unit 120 uses the video signal received via the example video signal input 150 and/or image(s) taken via the example camera 155 to determine (e.g., capture) a monitored image (or, equivalently, a monitored video frame) corresponding to the example multimedia presentation 110 provided by the example media device 105. The example monitoring unit 120 then processes luminance and/or chrominance information included in the monitored image to determine whether the corresponding monitored multimedia presentation 110 includes multiple content windows, such as the multiple content windows 140A-F of the illustrated example. If the monitored multimedia presentation 110 is determined to include multiple content windows (e.g., such as the multiple content windows 140A-F), the example monitoring unit 120 further determines which one or more of the content windows has been highlighted by a viewer.

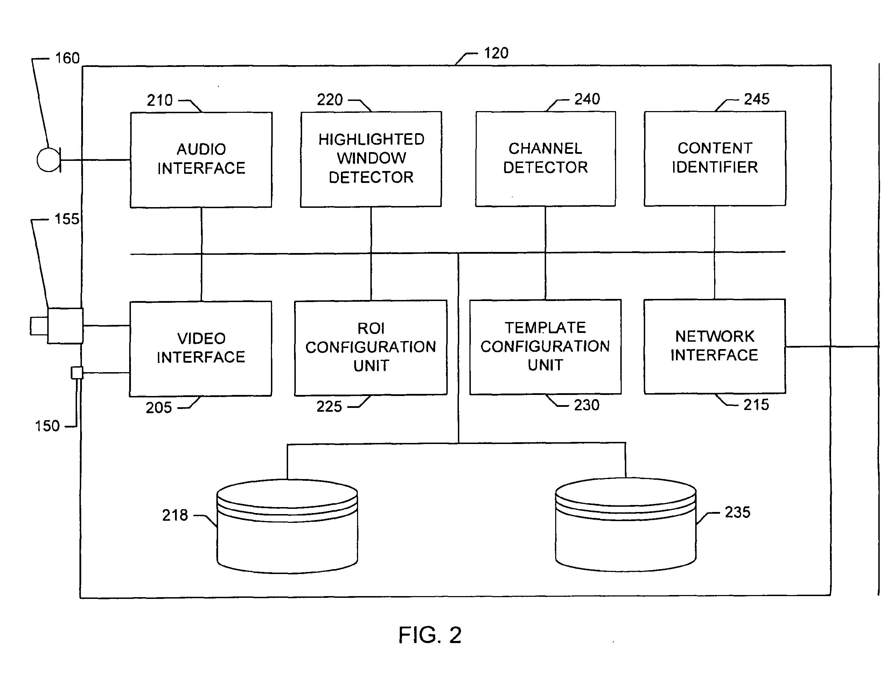

For example, in scenarios in which the multiple content windows 140A-F included the monitored multimedia presentation 110 have known locations, the example monitoring unit 120 can be configured or trained with predefined regions of interest in the multimedia presentation 110 corresponding to the known locations of the multiple content windows 140A-F. Additionally or alternatively, to support scenarios in which the identification label associated with a particular content window can be highlighted, the example monitoring unit 120 can be configured or trained with predefined regions of interest in the multimedia presentation 110 corresponding to known location of the multiple identification labels 145A-F. After being configured/trained with the predefined regions of interest, the example monitoring unit 120 processes the luminance and/or chrominance information included in the monitored image at each predefined region of interest to determine whether one or more of the associated content windows have been highlighted. Such region of interest processing is described in greater detail below in conjunction with the description of an example implementation of the monitoring unit 120 as illustrated in FIG. 2.

For scenarios in which the multiple content windows 140A-F included the monitored multimedia presentation 110 have possibly unknown (as well as known) locations, the example monitoring unit 120 additionally or alternatively can be configured or trained with a set of templates (e.g., such as in the form of binary images, data specifying shapes and/or sizes of image regions, data specifying pixel boundaries of image regions, etc.) representative of the shape(s) of all possible highlighted content windows 140A-F and/or identification regions 145A-F in the monitored multimedia presentation 110. After being configured/trained with the set of templates, the example monitoring unit 120 utilizes various digital image processing and matching techniques, such as binarization, correlation, etc., to compare the monitored image with the set of templates. For example, the monitoring unit 120 shifts some or all of the configured templates across the monitored image in both horizontal and vertical directions (or otherwise selects locations (e.g., pixel locations) and regions (e.g., pixel boundaries) of the binary monitored image for comparison with the configured template(s)) to determine whether correlation of any of the templates with the monitored image yields a match at any location in the monitored image. If a match is found, the location of the match and the particular template yielding the match are used to indicate that an associated content window 140A-F (and/or identification label 145A-F) in the monitored multimedia presentation 110 has been highlighted. Such template processing is described in greater detail below in conjunction with the description of the implementation of the monitoring unit 120 illustrated in FIG. 2.

In some example implementations, the monitoring unit 120 may make an initial determination regarding whether the monitored multimedia presentation 110 includes multiple content windows, such as the multiple content windows 140A-F of the illustrated example, before attempting to detect any highlighted content windows (e.g., using the region of interest or template processing described above). For example, to reduce the processing requirements of the monitoring unit 120, such highlighted window detection may be performed only if initial processing of a monitored image corresponding to the multimedia presentation 110 indicates that the multimedia presentation 110 includes multiple content windows. Any appropriate image processing techniques, such as line detection or edge detection techniques based on processing, for example, luminance and/or chrominance values of the monitored image, could be used to determine whether multiple content windows are included in the monitored multimedia presentation 110.

Assuming that the example monitoring unit 120 determines that a content window, such as the example content window 140A, included in the monitored multimedia presentation 110 has been highlighted, the monitoring unit 120 of the illustrated example further operates to identify the media content presented in the highlighted content window 140A. For example, if each content window 140A-F is assigned to a particular broadcast channel or, more generally, content source provided by the example service provider 115, the example monitoring unit 120 can identify the media content presented in the highlighted content window 140A by its location in the monitored multimedia presentation 110.

Additionally or alternatively, the example monitoring unit 120 can employ optical character recognition (OCR) and/or logo detection to process the highlighted content window 140A to obtain identification information (e.g., such as a broadcast channel number, name, logo, etc.) that can be used to identify media content presented in the highlighted content window 140A. Additionally or alternatively, the example monitoring unit 120 can determine video codes/signatures using video/image data obtained via the example video signal input 150 and/or the example camera 155 to identify the media content presented in the highlighted content window 140A.

Furthermore, the example monitoring unit 120 includes a microphone 160 to capture audio emanating from the example media device 105. Although not shown, the example monitoring unit 120 could also include an audio line input in addition or as an alternative to the example microphone 160. The example monitoring unit 120 of the illustrated example uses the microphone 160 to capture a monitored audio signal from the example media device 105 and corresponding to the example monitored multimedia presentation 110. Then, using any appropriate technique, the example monitoring unit 120 determines audio codes/signatures from the monitored audio signal to identify the media content presented in the highlighted content window 140A. For example, and as described above, when a viewer navigates through different content windows 140A-F of at least some example multimedia presentations 110 (e.g., such as a presentation corresponding to the DISH home portal channel), the audio emanating from the media device 105 changes to correspond to the particular content window that has been highlighted by the viewer. In such an example, audio codes/signatures determined from the monitored audio signal will correspond to the media content presented in the highlighted content window (e.g., content window 140A) and, thus, can be used to identify such media content.

The example monitoring unit 120 stores and reports monitoring data to the example central processing facility 125 at predetermined time intervals and/or upon occurrence of particular events (e.g., such as a prompt from the central processing facility 125 to the monitoring unit 120 to report any available monitoring data). The monitoring data includes, for example, detections of example multimedia presentations 110 including multiple content windows (e.g., such as the windows 140A-F), determinations of which such content windows have been highlighted by a viewer, identification information for the media content presented in such highlighted content windows, etc. In the illustrated example, the example monitoring unit 120 communicates with the example central processing facility 125 via the example network 130. The example network 130 may be implemented by any type of communication network, such as, for example, a company/enterprise local area network (LAN), a broadband cable network, a broadband satellite network, broadband mobile cellular network, an Internet service provider (ISP) providing access to the Internet, a dial-up connection, etc.

The central processing facility 125 of the illustrated example processes the monitoring data received from the example monitoring unit 120 to determine ratings information, content verification information, targeted advertising information, etc. Additionally, in at least some example implementations, the central processing facility 125 provides remote configuration of the monitoring unit 120, for example, to configure the predetermined regions of interest and/or the set of templates used to perform highlighted window detection. The example monitoring unit 120 of the illustrated example also supports local configuration of, for example, the predetermined regions of interest and/or the set of templates used to perform highlighted window detection via the example configuration terminal 135. The example configuration terminal 135 can be implemented using any type of terminal or computer, such as a computer workstation, a PDA, a handheld terminal, a mobile phone, etc.

A block diagram of an example implementation of the monitoring unit 120 of FIG. 1 is illustrated in FIG. 2. The example monitoring unit 120 of FIG. 2 includes an example video interface 205 implemented using any video interface technology capable of communicatively coupling with the example video input 150 (and, thereby, a video output of a monitored media device communicatively coupled thereto) and/or the example camera 155 included in the monitoring unit 120 to determine (e.g., capture) a monitored image corresponding to a multimedia presentation provided by a monitored media device, such as the example media device 105 of FIG. 1. The example monitoring unit 120 of FIG. 2 also includes an example audio interface 210 implemented using any audio interface technology capable of obtaining a monitored audio signal from the example microphone 160 and/or an example audio line input (not shown) included in the monitoring unit 120. The example monitoring unit 120 of FIG. 2 further includes an example network interface 215 implemented using any networking technology capable of interfacing with the example network 130 to support communication with a central processing facility, such as the example central processing facility 125 of FIG. 1. The example network interface 215 also supports interfacing with the example configuration terminal 135 of FIG. 1.

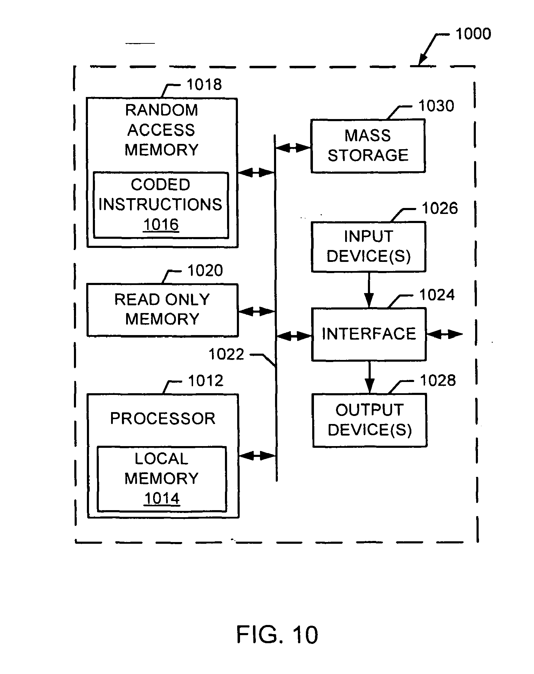

Additionally, the example ROI configuration unit 225 includes a monitored data storage unit 218 to store monitored image data obtained via the example video interface 205, monitored audio data obtained via the example audio interface 210, and/or any combination thereof. The example monitored data storage unit 218 may be implemented using any type of memory or storage technology. For example, the monitored data storage unit 218 may be implemented by the volatile memory 1018 and/or the mass storage device 1030 included in the example system 1000 illustrated in FIG. 10 and described in greater detail below.

To determine whether a monitored multimedia presentation, such as the example multimedia presentation 110 of FIG. 1, includes multiple content windows, such as the example content windows 140A-F, and to determine whether any such content window is highlighted by a viewer, the example monitoring unit 120 of FIG. 2 includes a highlighted window detector 220, a region of interest (ROI) configuration unit 225 and a template configuration unit 230. The example ROI configuration unit 225 allows a set of predetermined regions of interest to be specified as corresponding to one or more content windows having known locations in the multimedia presentation being monitored by the example monitoring unit 120. In the illustrated example, the ROI configuration unit 225 accepts ROI configuration information obtained via the network interface 215 from the example central processing facility 125 and/or the example configuration terminal 135 of FIG. 1. Examples of ROI configuration information accepted by the example ROI configuration unit 225 include a number of content windows included in the monitored multimedia presentation, a location of each content window, a size of each content window (e.g., if content windows have a predetermined shape with varying size), a shape of each content window (e.g., specified as points or vertices bounding a particular content window at a particular location, as a selected shape and size from a set of possible shapes having different sizes, etc.), etc.

The example ROI configuration unit 225 stores a set of predefined regions of interest specified using the obtained ROI configuration information in an example configuration data storage unit 235. The example configuration data storage unit 235 may be implemented using any type of memory or storage technology. For example, the configuration data storage unit 235may be implemented by the non-volatile memory 1020 included in the example system 1000 illustrated in FIG. 10 and described in greater detail below. Additionally or alternatively, the configuration data storage unit 235may be implemented by the volatile memory 1018 and/or the mass storage device 1030 included in the example system 1000 illustrated in FIG. 10 and described in greater detail below. As described in greater detail below, the example highlighted window detector 220 is able to retrieve the set of predefined regions of interest stored in the example configuration data storage unit 235 to perform highlighted content window detection for scenarios in which the content windows included in a monitored multimedia presentation have known locations.

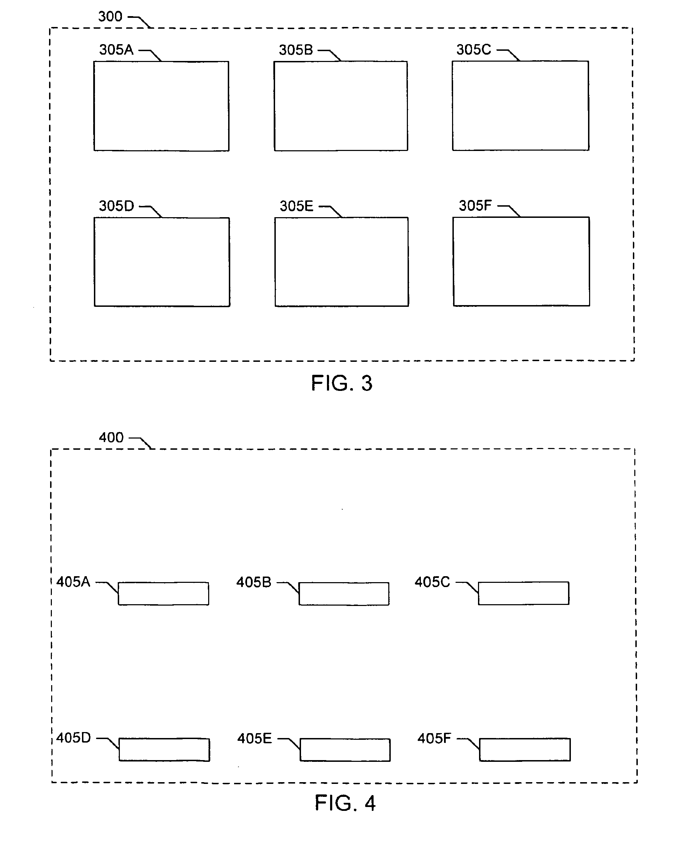

A first example set of predetermined regions of interest 300 that may be specified and stored by the example ROI configuration unit 225 are illustrated in FIG. 3. The first example set of predetermined regions of interest 300 corresponds to the example multimedia presentation 110 of FIG. 1. More specifically, the first example set of predetermined regions of interest 300 represents the regions of the example multimedia presentation 110 associated with the example content windows 140A-F. Accordingly, the first example set of predetermined regions of interest 300 includes six (6) predetermined regions of interest 305A-F. The six (6) predetermined regions of interest 305A-F correspond respectively to the six (6) example content windows 140A-F of the example multimedia presentation 110. The six (6) predetermined regions of interest 305A-F can be specified by the example ROI configuration unit 225 using any combination of location, size and/or shape information, or any other type of configuration information capable of specifying multiple regions in an image, video frame, etc.

A second example set of predetermined regions of interest 400 that may be specified and stored by the example ROI configuration unit 225 are illustrated in FIG. 4. The second example set of predetermined regions of interest 400 also corresponds to the example multimedia presentation 110 of FIG. 1. More specifically, the second example set of predetermined regions of interest 400 represents the regions of the example multimedia presentation 110 associated with the example identification labels 145A-F. Accordingly, the second example set of predetermined regions of interest 400 includes six (6) predetermined regions of interest 405A-F. The six (6) predetermined regions of interest 405A-F correspond respectively to the six (6) example identification labels 145A-F included in the example multimedia presentation 110. Like the example of FIG. 3, the six (6) predetermined regions of interest 405A-F of FIG. 4 can be specified by the example ROI configuration unit 225 using any combination of location, size and/or shape information, or any other type of configuration information capable of specifying multiple regions in an image, video frame, etc.

Sets of predetermined regions of interest other than the examples of FIGS. 3 and 4 can also be configured by the example ROI configuration unit 225.

Returning to FIG. 2, the example template configuration unit 230 allows a set of templates to be specified for use in finding one or more content windows having possibly unknown (as well as known) locations in the multimedia presentation being monitored by the example monitoring unit 120. In the illustrated example, the template configuration unit 230 accepts template configuration information obtained via the network interface 215 from the example central processing facility 125 and/or the example configuration terminal 135 of FIG. 1. Examples of template configuration information obtained by the example template configuration unit 230 includes a number of templates to be used to search the monitored multimedia presentation, a size of each template (e.g., if templates have a predetermined shape with varying size), a shape of each template (e.g., specified as points or vertices bounding the template, as a selection from a group of possible templates, etc.), etc.

The example template configuration unit 230 stores a set of templates specified using the obtained template configuration information in the example configuration data storage unit 235. As described in greater detail below, the example highlighted window detector 220 is able to retrieve the set of templates stored in the example configuration data storage unit 235 to perform highlighted content window detection for scenarios in which the content windows included in a monitored multimedia presentation have possibly unknown (as well as known locations.

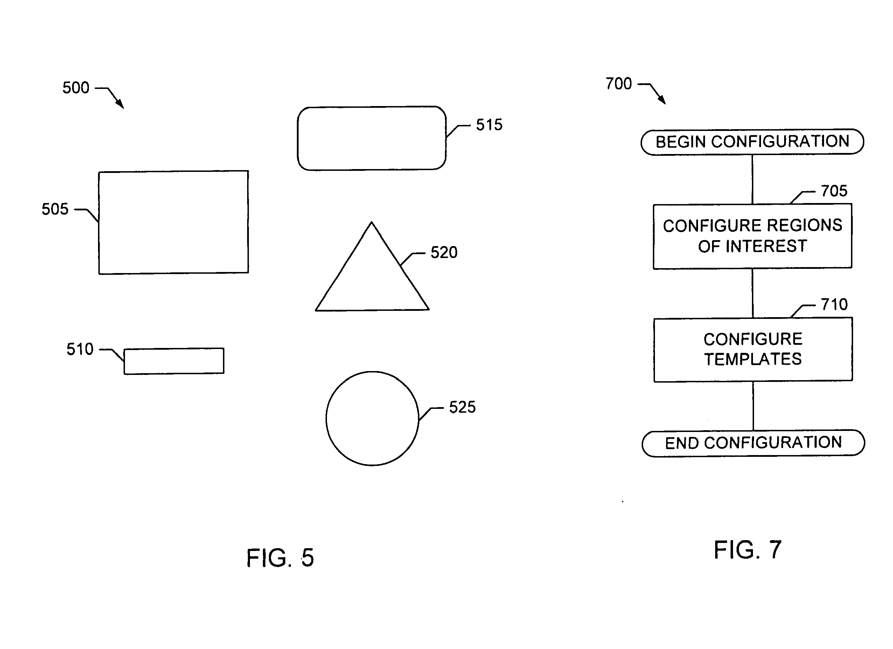

An example set of templates 500 that may be specified and stored by the example template configuration unit 230 are illustrated in FIG. 5. The example set of templates 500 includes templates 505 and 510 that could alone or together be used to perform highlighted window detection associated with the example multimedia presentation 110 of FIG. 1. For example, the template 505 has a specified shape and size corresponding to an example content window 140A-F included in the example multimedia presentation 110 and, as described in greater detail below, can be used to detect whether one or more of the example content windows 140A-F are highlighted. The example template 510 has a specified a specified shape and size corresponding to an example identification label 145A-F included in the example multimedia presentation 110 and, as described in greater detail below, can be used to detect whether one or more of example identification labels 145A-F are highlighted. Other example templates 515, 520 and 525 having shapes and sizes corresponding to other possible content windows, identification labels, menus, icons, etc., that could included in the monitored multimedia presentation are illustrated in FIG. 5. Templates having shapes and sizes different from the examples illustrated in FIG. 5 can also be configured by the example template configuration unit 230.

Returning to FIG. 2, the example highlighted window detector 220 included in the example monitoring unit 120 is communicatively coupled to the example video interface 205 (e.g., via the example monitored data storage unit 218) to obtain monitored image(s) determined (e.g. captured) by the video interface 205 and corresponding to a monitored multimedia presentation including multiple content windows, such as the example multimedia presentation 105 provided by the example media device 105 of FIG. 1. For example, the video interface 205 may store the monitored images in the example monitored data storage unit 218 for retrieval by the example highlighted window detector 220. The highlighted window detector 220 of the illustrated processes regions of the monitored image to determine a respective parameters value for each processed region indicative of whether a content window is included in the monitored multimedia presentation and, if so, whether the content window is highlighted. As described below, each processed region is selected by the highlighted window detector 220 using the set of regions of interest and/or the set of templates stored in the example configuration data storage unit 235. As such, each processed region of the monitored image has a shape and possibly a location corresponding to a respective content window included in the monitored multimedia presentation.

In many multimedia presentations including multiple content windows, when a content window is highlighted, at least a portion of the region of the multimedia presentation corresponding to the highlighted window (e.g., such as substantially all of the highlighted window or just a border around the highlighted window or along a segment of the window, etc.) exhibits luminance and/or chrominance levels that are typically consistent throughout the region (or portion of the region) and significantly higher or lower than the luminance and chrominance levels associated with the remainder of the multimedia presentation, including regions associated with the other content windows of the multimedia presentation. Thus, in the illustrated example, the highlighted window detector 220 determines the parameter values for each processed region to be representative of a luminance and/or chrominance associated with the processed region. The example highlighted window detector 220 then compares the determined luminance and/or chrominance parameter value for the processed region to a highlight threshold to determine whether the processed region corresponds to a highlighted content window. In an example implementation, the highlight threshold can be a fixed threshold determined to be representative of a luminance and/or chrominance parameter that must be achieved or exceeded by a content window for the content window to be reliably detected as being highlighted. In another example implementation, the highlight threshold can be a variable (e.g., adaptive) threshold determined based on the overall luminance and/or chrominance associated with the entire monitored image, the average luminance and/or chrominance associated with some or all of the regions associated with possible content windows in the monitored image, a combination of these luminance and/or chrominance values, etc. In such an example implementation, a processed region may be determined to correspond to a highlighted content window if the region's luminance and/or chrominance parameter exceeds the variable (e.g., adaptive) highlight threshold or deviates from the variable (e.g., adaptive) highlight threshold by some specified amount, factor, etc.

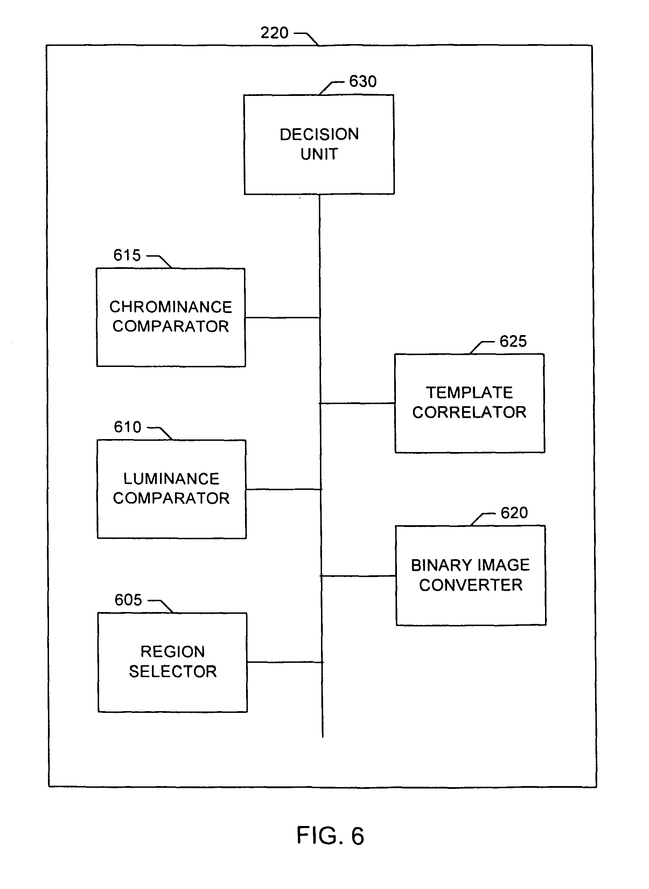

An example implementation of the highlighted window detector 220 of FIG. 2 is illustrated in FIG. 6. Turning to FIG. 6, the highlighted window detector 220 of the illustrated example includes a region selector 605, a luminance comparator 610 and a chrominance comparator 615 to perform highlighted content window detection using a set of predefined regions of interest, such as the sets of predefined regions of interest 300 and/or 400 described above in connection with FIGS. 3 and 4. The example highlighted window detector 220 of FIG. 6 also includes a binary image converter 620 and a template correlator 625 to perform highlighted content window detection using a set of templates, such as the set of templates 500 described above in connection with FIG. S. The example highlighted window detector 220 of FIG. 6 further includes a decision unit 630 to detect a highlighted content window included in a monitored multimedia presentation based on information determined by the example luminance comparator 610, the example chrominance comparator 615 and/or the example template correlator 625.

To support highlighted content window detection based on predetermined regions of interest, the region selector 605 selects a predetermined region of a monitored image obtained (e.g., captured) by, for example, the video interface 205 of FIG. 2 from a set of predefined regions of interest configured by, for example, the ROI configuration unit 225 of FIG. 2. For example, the region selector 605 could select one of the predefined regions of interest 305A-F of FIG. 3 or 405A-F of FIG. 4 of the monitored image. The example region selector 605 then provides the selected region of the monitored image to the example luminance comparator 610 and/or the example chrominance comparator 615 for subsequent processing to determine the selected region's respective luminance and/or chrominance parameter values. Depending on a particular example implementation, the region selector 605 continues selecting predetermined regions of interest from the configured set of predetermined regions of interest until, for example, all the regions of interest have been processed, a specified subset of the regions of interest have been processed, a highlighted content window has been detected, etc.

The example luminance comparator 610 included in the example highlighted window detector 220 of FIG. 6 processes the selected region of the monitored image provided by the example region selector 605 to determine a respective luminance parameter value of the selected region. The luminance comparator 610 of the illustrated example can be implemented using any technique for determining a luminance associated with a selected region of a monitored image. For example, the luminance comparator 610 can determine the luminance associated with the selected region of a monitored image by processing each pixel included in the selected region, determining the luminance of each pixel and then summing, averaging, integrating, etc., or otherwise combining the luminances of each pixel to determine the luminance parameter value for the selected region. In some example implementations, instead of processing all of the pixels in the selected region of the monitored image, the luminance comparator 610 can be configured to process a subset of the pixels of the selected region to, for example, exclude outliers, reduce processing requirements, etc.

The example luminance comparator 610 also compares the luminance parameter value determined for a selected region of the monitored image to a luminance-based highlight threshold to determine whether a respective content window associated with the location of the selected region in the monitored image is highlighted. In the illustrated example, the luminance-based highlight threshold used by the example luminance comparator 610 corresponds to a luminance associated with human-perceivable highlighting of at least one of multiple content windows included in a monitored multimedia presentation. In an example implementation, the luminance comparator 610 is configured with a fixed luminance-based highlight threshold determined to be representative of a luminance parameter that must be achieved or exceeded by a selected region corresponding to a respective content window for the content window to be reliably detected as being highlighted. In another example implementation, the luminance-based highlight threshold is a variable (e.g., adaptive) threshold determined based on the overall luminance associated with the entire monitored image, the average luminance and associated with some or all of the regions associated with possible content windows in the monitored image, a combination of these luminance values, etc., as determined by the example luminance comparator 610.

The example chrominance comparator 615 included in the example highlighted window detector 220 of FIG. 6 processes the selected region of the monitored image provided by the example region selector 605 to determine a respective chrominance parameter value of the selected region. The chrominance comparator 615 of the illustrated example can be implemented using any technique for determining a chrominance associated with a selected region of a monitored image. For example, the chrominance comparator 615 can determine the chrominance associated with the selected region of a monitored image by processing each pixel included in the selected region, determining the chrominance of each pixel and then summing, averaging, integrating, etc., or otherwise combining the chrominances of each pixel to determine the chrominance parameter value for the selected region. In some example implementations, instead of processing all of the pixels in the selected region of the monitored image, the chrominance comparator 615 can be configured to process a subset of the pixels of the selected region to, for example, exclude outliers, reduce processing requirements, etc.

The example chrominance comparator 615 also compares the chrominance parameter value determined for a selected region of the monitored image to a chrominance-based highlight threshold to determine whether a respective content window associated with the location of the selected region in the monitored image is highlighted. In the illustrated example, the chrominance-based highlight threshold used by the example chrominance comparator 615 corresponds to a chrominance associated with human-perceivable highlighting of at least one of multiple content windows included in a monitored multimedia presentation. In an example implementation, the chrominance comparator 615 is configured with a fixed chrominance-based highlight threshold determined to be representative of a chrominance parameter that must be achieved or exceeded by a selected region corresponding to a respective content window for the content window to be reliably detected as being highlighted. In another example implementation, the chrominance-based highlight threshold is a variable (e.g., adaptive) threshold determined based on the overall chrominance associated with the entire monitored image, the average chrominance and associated with some or all of the regions associated with possible content windows in the monitored image, a combination of these chrominance values, etc., as determined by the example chrominance comparator 615.

The example decision unit 630 included in the example highlighted window detector 220 of FIG. 6 processes the comparison results determined by the example luminance comparator 610 and/or the example chrominance comparator 615 to determine whether a respective content window associated with the location of the selected region in the monitored image is highlighted. In an example implementation, the decision unit 630 is configured to decide that the location of the selected region of the monitored image corresponds to a highlighted content window in a monitored multi-window multimedia presentation if the comparison results determined by the example luminance comparator 610 and/or the example chrominance comparator 615 indicate that the determined luminance and/or chrominance parameter values are greater than or equal to the associated highlight threshold. In another example implementation, the decision unit 630 is configured to decide that the location of the selected region of the monitored image corresponds to a highlighted content window in a monitored multi-window multimedia presentation if the comparison results determined by the example luminance comparator 610 and/or the example chrominance comparator 615 indicate that the determined luminance and/or chrominance parameter deviated from the associated highlight threshold by some specified amount, factor, etc. Depending upon the particular example implementation, the decision unit 630 can be configured to decide that the location of the selected region of the monitored image corresponds to a highlighted content window in a monitored multi-window multimedia presentation if either one of the determined luminance and/or chrominance parameter values are greater than or equal to, or deviated from, the associated threshold, or the decision unit 630 can be configured to require that the luminance and chrominance parameter values must both be greater than or equal to, or deviate from, their associated thresholds for the decision unit 630 to decide that a highlighted content window is located at the selected region of the monitored image.

To support highlighted content window detection based on a set of templates, the example binary image converter 620 of FIG. 6 converts a monitored image obtained (e.g., captured) by, for example, the video interface 205 of FIG. 2 to a binary monitored image corresponding to a monitored multimedia presentation. In the illustrated example, the binary image converter 620 uses a binary conversion threshold to convert grayscale or color pixels of the monitored image to respective binary pixels of the binary monitored image. Each binary pixel has one of two possible values, such as black or white. In an example implementation, the binary conversion threshold is configured and/or determined to correspond to a pixel luminance value associated with human-perceivable highlighting of a content window included in a multi-window multimedia presentation. In another example implementation, the binary conversion threshold is configured and/or determined to correspond to a pixel chrominance value associated with human-perceivable highlighting of a content window included in a multi-window multimedia presentation. In yet another example implementation, the binary conversion threshold is configured and/or determined to correspond to a combined pixel luminance and chrominance value associated with human-perceivable highlighting of a content window included in a multi-window multimedia presentation. Such binary conversion thresholds can be fixed or variable and based on configuring or training the example binary image converter 620 with images known to include highlighted content windows and other images known to not include highlighted content windows to tailor binary image conversion to a particular multimedia presentation and/or media device being monitored.

The example template correlator 625 included in the example highlighted window detector 220 of FIG. 6 processes the binary monitored image determined by the example binary image converter 620 using templates selected from a set of templates configured by, for example, the template configuration unit 230 of FIG. 2. For example, the template correlator 625 could select one of the templates 505A-F of FIG. 5 for use in processing the binary monitored image. Depending on a particular example implementation, the template correlator 625 continues selecting templates from the configured set of templates for use in processing the binary monitored image until, for example, all the templates have been processed, a specified subset of the templates have been processed, a highlighted content window has been detected, etc.

After selecting a particular template, the example template correlator 625 begins shifting the selected template across a combination of horizontal shift positions and vertical shift positions covering some or all of the binary monitored image. For each horizontal shift position and vertical shift position, the example template correlator 625 selects a respective region of the binary monitored image located at the particular horizontal shift position and vertical shift position, and bounded by the template. The example template correlator 625 then correlates the selected region of the binary monitored image with the template to determine a correlation parameter value associated with the selected region of the binary monitored image. Because the binary image converter 620 used a binary conversion threshold based on pixel luminance values, pixel chrominance values, or both, the correlation parameter value determined by the example template correlator 625 for the selected region of the binary monitored image is representative of number of pixels in the selected region of the monitored image that had luminance values and/or chrominance values greater than or equal to the binary conversion threshold.

The example decision unit 630 included in the example highlighted window detector 220 of FIG. 6 then processes the correlation parameter value determined by the example template correlator 625 to determine whether a content window is highlighted and located in the monitored multimedia presentation at the horizontal shift position and the vertical shift position associated with the selected region of the binary monitored image. In an example implementation, the decision unit 630 is configured to decide that the selected region of the monitored image located at a particular horizontal shift position and vertical shift position corresponds to a highlighted content window in a monitored multi-window multimedia presentation if the correlation parameter value determined by correlating the selected region with the selected template is greater than or equal to a highlight threshold. In another example implementation, the decision unit 630 is configured to decide that the selected region of the monitored image located at a particular horizontal shift position and vertical shift position corresponds to a highlighted content window in a monitored multi-window multimedia presentation if the correlation parameter value determined by correlating the selected region with the selected template deviates from the highlight threshold by some specified amount, factor, etc. Because the parameter value determined by the example template correlator 625 for the selected region of the binary monitored image is representative of the number of pixels in the selected region of the monitored image that had luminance values and/or chrominance values greater than or equal to the binary conversion threshold, the highlight threshold could be specified as a minimum number of pixels required to have luminance values and/or chrominance values greater than or equal to the binary conversion threshold for the selected region to be determined to correspond to a highlighted content window.

While an example manner of implementing the highlighted window detector 220 of FIG. 2 has been illustrated in FIG. 6, one or more of the elements, processes and/or devices illustrated in FIG. 6 may be combined, divided, re-arranged, omitted, eliminated and/or implemented in any other way. Further, the example region selector 605, the example luminance comparator 610, the example chrominance comparator 615, the example binary image converter 620, the example template correlator 625, the example decision unit 630 and/or, more generally, the example highlighted window detector 220 of FIG. 6 may be implemented by hardware, software, firmware and/or any combination of hardware, software and/or firmware. Thus, for example, any of the example region selector 605, the example luminance comparator 610, the example chrominance comparator 615, the example binary image converter 620, the example template correlator 625, the example decision unit 630 and/or, more generally, the example highlighted window detector 220 could be implemented by one or more circuit(s), programmable processor(s), application specific integrated circuit(s) (ASIC(s)), programmable logic device(s) (PLD(s)) and/or field programmable logic device(s) (FPLD(s)), etc. When any of the appended claims are read to cover a purely software and/or firmware implementation, at least one of the example highlighted window detector 220, the example region selector 605, the example luminance comparator 610, the example chrominance comparator 615, the example binary image converter 620, the example template correlator 625 and/or the example decision unit 630 are hereby expressly defined to include a tangible medium such as a memory, digital versatile disk (DVD), compact disk (CD), etc., storing such software and/or firmware. Further still, the example highlighted window detector 220 of FIG. 6 may include one or more elements, processes and/or devices in addition to, or instead of, those illustrated in FIG. 6, and/or may include more than one of any or all of the illustrated elements, processes and devices.

Returning to FIG. 2, the monitoring unit 120 of the illustrated example further includes a channel detector 240 to determine whether a media device (e.g., such as the example media device 105) being monitored by the monitoring unit 120 has been tuned to a particular known channel capable of providing a multimedia presentation including multiple content windows (e.g., such as the example multimedia presentation 110 including the multiple content windows 140A-F). In the illustrated example, the channel detector 240 is communicatively coupled to the example highlighted window detector 220 and provides an indication that the monitored media device is tuned to the particular known channel (e.g., such as the DISH home portal channel) from a plurality of tunable channels when the example highlighted window detector 220 detects that a content window in a monitored multimedia presentation is highlighted. Detection of such a highlighted content window in the monitored multimedia presented can be a good indication that the media device being monitored by the example monitoring unit 120 has been tuned to the particular channel known to be capable of providing a multi-window multimedia presentation. The example channel detector 240 may also include any other type of channel detection technology capable of determining to which channel a monitored media device has been tuned.

The monitoring unit 120 of the illustrated example also includes a content identifier 245 to identify the content presented in a highlighted content window of a monitored, multi-window multimedia presentation. In the illustrated example, the content identifier 245 is communicatively coupled to the example highlighted window detector 220 and operates to identify only the media content presented in a particular content window that the highlighted window detector 220 has detected as being highlighted in the monitored multimedia presentation. In an example implementation, each content window included in a monitored multimedia presentation is pre-assigned to a particular broadcast channel or, more generally, content source. In such an example, the content identifier 245 identifies the content presented in a highlighted content window detected by the example highlighted window detector 220 as corresponding to the particular broadcast channel or content source assigned to the highlighted content window. In another example implementation, the content identifier 245 employs OCR and/or logo detection to process the content presented in a highlighted content window detected by the example highlighted window detector 220 to obtain identification information (e.g., such as a broadcast channel number, name, logo, etc.) that can be used to identify the source of the content presented in the highlighted content window. In yet another example implementation, the content identifier 245 determines audio codes and/or signatures from an audio signal emitted by the media device being monitored, and/or video codes and/or signatures from a video signal emitted by the media device, to identify the content presented in a highlighted content window detected by the example highlighted window detector 220. In still another example implementation, the content identifier 245 uses any combination of pre-assigned broadcast channels and/or content sources, OCR and/or logo detection, audio and/or video codes and/or signatures, etc., to identify the content presented in a highlighted content window detected by the example highlighted window detector 220.

While an example manner of implementing the example monitoring unit 120 of FIG. 1 has been illustrated in FIG. 2, one or more of the elements, processes and/or devices illustrated in FIG. 2 may be combined, divided, re-arranged, omitted, eliminated and/or implemented in any other way. Further, the example video interface 205, the example audio interface 210, the example network interface 215, the example highlighted window detector 220, the example ROI configuration unit 225, the example template configuration unit 230, the example channel detector 240, the example content identifier 245 and/or, more generally, the example monitoring unit 120 of FIG. 2 may be implemented by hardware, software, firmware and/or any combination of hardware, software and/or firmware. Thus, for example, any of the example video interface 205, the example audio interface 210, the example network interface 215, the example highlighted window detector 220, the example ROI configuration unit 225, the example template configuration unit 230, the example channel detector 240, the example content identifier 245 and/or, more generally, the example monitoring unit 120 could be implemented by one or more circuit(s), programmable processor(s), application specific integrated circuit(s) (ASIC(s)), programmable logic device(s) (PLD(s)) and/or field programmable logic device(s) (FPLD(s)), etc. When any of the appended claims are read to cover a purely software and/or firmware implementation, at least one of the example monitoring unit 120, the example video interface 205, the example audio interface 210, the example network interface 215, the example highlighted window detector 220, the example ROI configuration unit 225, the example template configuration unit 230, the example channel detector 240 and/or the example content identifier 245 are hereby expressly defined to include a tangible medium such as a memory, digital versatile disk (DVD), compact disk (CD), etc., storing such software and/or firmware. Further still, the example monitoring unit 120 of FIG. 2 may include one or more elements, processes and/or devices in addition to, or instead of, those illustrated in FIG. 2, and/or may include more than one of any or all of the illustrated elements, processes and devices.

Flowcharts representative of example machine readable instructions that may be executed to implement the example media content monitoring system 100, the example monitoring unit 120, the example video interface 205, the example audio interface 210, the example network interface 215, the example highlighted window detector 220, the example ROI configuration unit 225, the example template configuration unit 230, the example channel detector 240, the example content identifier 245, the example region selector 605, the example luminance comparator 610, the example chrominance comparator 615, the example binary image converter 620, the example template correlator 625 and/or the example decision unit 630 are shown in FIGS. 7, 8 and 9A-9B. In these examples, the machine readable instructions represented by each flowchart may comprise one or more programs for execution by: (a) a processor, such as the processor 1012 shown in the example computer 1000 discussed below in connection with FIG. 10, (b) a controller, and/or (c) any other suitable device. The one or more programs may be embodied in software stored on a tangible medium such as, for example, a flash memory, a CD-ROM, a floppy disk, a hard drive, a DVD, or a memory associated with the processor 1012, but the entire program or programs and/or portions thereof could alternatively be executed by a device other than the processor 1012 and/or embodied in firmware or dedicated hardware (e.g., implemented by an application specific integrated circuit (ASIC), a programmable logic device (PLD), a field programmable logic device (FPLD), discrete logic, etc.). For example, any or all of the example media content monitoring system 100, the example monitoring unit 120, the example video interface 205, the example audio interface 210, the example network interface 215, the example highlighted window detector 220, the example ROI configuration unit 225, the example template configuration unit 230, the example channel detector 240, the example content identifier 245, the example region selector 605, the example luminance comparator 610, the example chrominance comparator 615, the example binary image converter 620, the example template correlator 625 and/or the example decision unit 630 could be implemented by any combination of software, hardware, and/or firmware. Also, some or all of the machine readable instructions represented by the flowchart of FIGS. 7, 8 and 9A-9B may be implemented manually. Further, although the example machine readable instructions are described with reference to the flowcharts illustrated in FIGS. 7, 8 and 9A-9B, many other techniques for implementing the example methods and apparatus described herein may alternatively be used. For example, with reference to the flowcharts illustrated in FIGS. 7, 8 and 9A-9B, the order of execution of the blocks may be changed, and/or some of the blocks described may be changed, eliminated, combined and/or subdivided into multiple blocks.

Example machine readable instructions 700 that may be executed to perform a configuration procedure to implement the example monitoring unit 120 of FIGS. 1 and/or 2 are represented by the flowchart shown in FIG. 7. The example machine readable instructions 700 may be executed when the example monitoring unit 120 is powered-on and/or restarted, when a configuration mode of the example monitoring unit 120 is activated, etc., or any combination thereof. With reference to the example monitoring unit 120 of FIG. 2, the machine readable instructions 700 begin execution at block 705 of FIG. 7 at which the example ROI configuration unit 225 included in the example monitoring unit 120 configures a set of predetermined regions of interest corresponding to known locations of a respective set of content windows included in a monitored multimedia presentation. For example, at block 705 the ROI configuration unit 225 accepts ROI configuration information obtained via the network interface 215 from the example central processing facility 125 and/or the example configuration terminal 135. In an example implementation, the obtained ROI configuration information includes number, location, size, shape and/or any other type(s) of information that allows the example ROI configuration unit 225 to specify the example sets of predetermined regions of interest 300 and/or 400 corresponding to the example multimedia presentation 110 having the multiple content windows 140A-F.

Next, control proceeds to block 710 at which the example template configuration unit 230 included in the example monitoring unit 120 configures a set of templates for use in finding one or more content windows having possibly unknown (as well as known) locations in a monitored multimedia presentation. For example, at block 710 the example template configuration unit 230 accepts template configuration information obtained via the network interface 215 from the example central processing facility 125 and/or the example configuration terminal 135. In an example implementation, the obtained template configuration information includes number, size, shape and/or any other type(s) of information that allows the example template configuration unit 230 to specify the example set of templates 500 that may be used to detect a highlighted content window in the example multimedia presentation 110 having the multiple content windows 140A-F. After processing at block 710 completes, execution of the example machine readable instructions 700 ends.

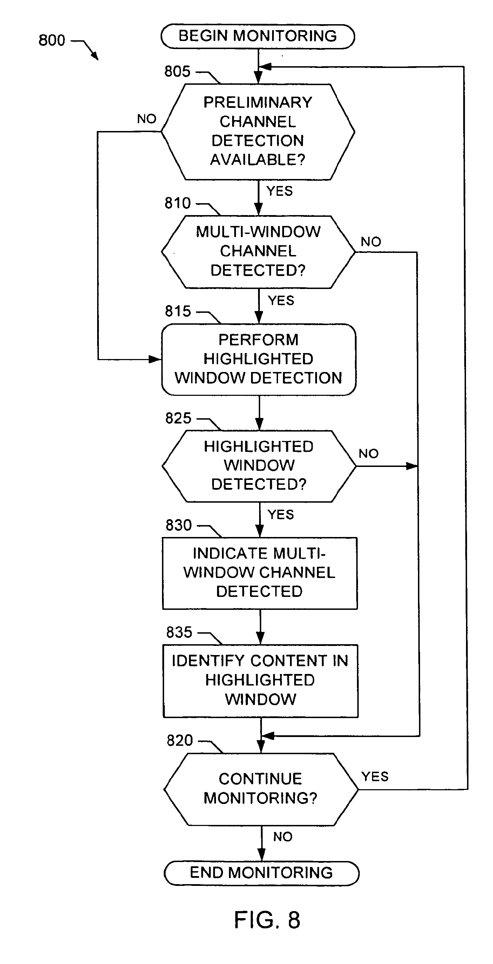

Example machine readable instructions 800 that may be executed to perform a monitoring procedure to implement the example monitoring unit 120 of FIGS. 1 and/or 2 are represented by the flowchart shown in FIG. 8. The example machine readable instructions 800 may be executed continuously, at predetermined intervals, upon detection of an event (e.g., such as detection of a channel change event, detection of a remote control button press, detection of a command sent by a remote control or other input device, etc.), etc., or any combination thereof. With reference to the example monitoring unit 120 of FIG. 2, the machine readable instructions 800 begin execution at block 805 of FIG. 8 at which the example monitoring unit 120 determines whether a preliminary channel detection procedure is available to determine whether a monitored media device (e.g., such as the example media device 105) is tuned to a channel capable of providing a multimedia presentation including multiple content windows (e.g., such as the example multimedia presentation 110 including the multiple content windows 140A-F). If such a preliminary channel detection procedure is available (block 805), control proceeds to block 810 at which the example channel detector 240 implements any appropriate channel detection technique to determine whether the media device being monitored is tuned to a known (e.g., predefined or previously recognized) channel capable of providing a multimedia presentation including multiple content windows, also referred to as a "multi-window channel." If such a multi-window channel is detected (block 810), or if no preliminary channel detection procedure is available (block 805), control proceeds to block 815. Otherwise, control proceeds to block 820.

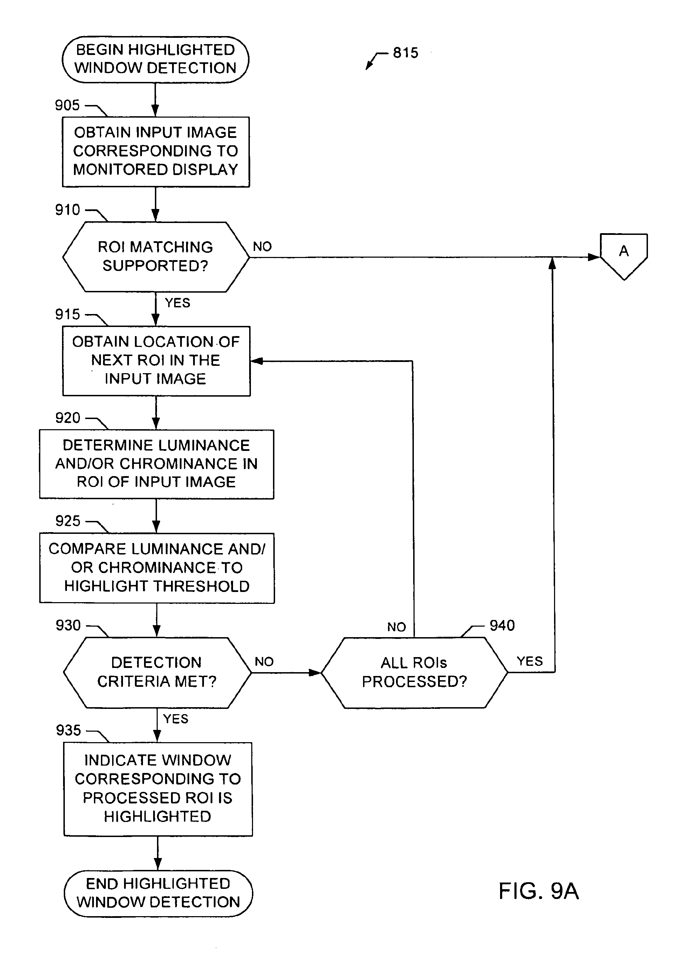

At block 815, the example monitoring unit 120 implements a highlighted window detection procedure to determine whether a monitored multimedia presentation (e.g., such as the multimedia presentation 110) includes one or more highlighted content windows (e.g., such as the example highlighted content window 140A). Example machine readable instructions that may be executed to implement the processing at block 815 are illustrated in FIGS. 9A-9B and described in greater detail below. Next, control proceeds to block 825 at which the example monitoring unit 120 determines whether a highlighted content window was detected via the processing at block 815. If a highlighted content window was not detected (block 825), control proceeds to block 820. However, if a highlighted content window was detected (block 825), control proceeds to block 830.

At block 830, the example channel detector 240 included in the example monitoring unit 120 determines whether the media device (e.g., such as the example media device 105) being monitored by the monitoring unit 120 has been tuned to a multi-window channel. For example, at block 830 the example channel detector 240 provides an indication that the monitored media device is tuned to the particular known channel (e.g., such as the DISH home portal channel) from a plurality of tunable channels because the processing at block 815 detected that a content window in a monitored multimedia presentation is highlighted. Next, control proceeds to block 835 at which the example content identifier 245 included in the example monitoring unit 120 identifies the content presented in the highlighted content window detected via the highlighted window detection processing at block 815. For example, and as described in greater detail above, at block 835 the example content identifier 245 can use any one or a combination of pre-assigned broadcast channels and/or content sources, OCR and/or logo detection, audio and/or video codes and/or signatures, etc., to identify the content presented in a highlighted content window detected by the processing at block 815.

Next, control proceeds to block 820 at which the example monitoring unit 120 determines whether monitoring is to continue. For example, at block 820 the example monitoring unit 120 can determine whether monitoring is to continue based on whether the monitoring unit 120 is configured to perform monitoring continuously, at predetermined intervals, upon detection of a particular event, etc. If monitoring is to continue (block 820), control returns to block 805 and blocks subsequent thereto to continue monitoring processing. However, if monitoring is not to continue (block 820), execution of the example machine readable instructions 800 ends.

Example machine readable instructions 815 that may be executed to perform a highlighted window detection procedure to implement the processing at block 815 of FIG. 8 and/or the example highlighted window detector 220 of FIGS. 2 and/or 6 are represented by the flowchart shown in FIGS. 9A-9B. With reference to the example highlighted window detector 220 of FIG. 6, the machine readable instructions 815 begin execution at block 905 of FIG. 9A at which the example highlighted window detector 220 obtains a monitored image from the example video interface 205 that corresponds to a display of a monitored media device, such as the example media device 105. For example, at block 905 the monitored image may be determined (e.g., captured) by the example video interface 205 from the example video input 150 communicatively coupled to a video output of the monitored media device. As an alternative example, at block 905 the monitored image may be determined (e.g., captured) by the example video interface 205 from the example camera 155 positioned to view a display of the monitored media device.

Next, control proceeds to block 910 at which the example highlighted window detector 220 determines whether highlighted window detection based on region of interest matching is supported (e.g., based on configuration data maintained in the highlighted window detector 220 and/or monitoring unit 120). If highlighted window detection based on region of interest matching is supported (block 910), control proceeds to block 915 at which the example region selector 605 included in the example highlighted window detector 220 selects (e.g., extracts) a predefined region of interest from the monitored image obtained at block 905. At block 915, the selected (e.g., extracted) region of the monitored image corresponds to a region of interest selected from a set of predefined regions of interest configured by, for example, execution of the example machine readable instructions 700 of FIG. 7.

Control then proceeds to block 920 at which the example luminance comparator 610 included in the example highlighted window detector 220 processes the selected region of the monitored image determined at block 915 to determine a respective luminance parameter value of the selected region, as described in greater detail above. Additionally or alternatively, at block 920 the example chrominance comparator 615 included in the example highlighted window detector 220 processes the selected region of the monitored image determined at block 915 to determine a respective chrominance parameter value of the selected region, as described in greater detail above. Next, control proceeds to block 925 at which the example luminance comparator 610 compares the luminance parameter value determined at block 920 for the selected region of the monitored image to a fixed or variable luminance-based highlight threshold. Additionally or alternatively, at block 925 the example chrominance comparator 615 compares the chrominance parameter value determined at block 920 for the selected region of the monitored image to a fixed or variable chrominance-based highlight threshold. At block 920, the highlight threshold(s) are configured and/or determined to represent luminance and/or chrominance associated with human-perceivable highlighting of at least one of multiple content windows included in a monitored multimedia presentation, as described in greater detail above.

Control next proceeds to block 930 at which the example decision unit 630 included in the example highlighted window detector 220 determines whether comparison at block 925 of the luminance and/or chrominance parameter values for the selected region to the respective luminance-based and/or chrominance-based highlight thresholds indicates that highlighted window detection criteria have been met. For example, at block 925 the example decision unit 630 may determine that a highlighted content window corresponds to the selected region of the monitored image being processed if the comparison results determined at block 925 indicate that the determined luminance and/or chrominance parameter values are greater than or equal to the respective highlight threshold(s). Additionally or alternatively, at block 925 the decision unit 630 may determine that a highlighted content window corresponds to the selected region of the monitored image being processed if the comparison results determined at block 925 indicate that the determined luminance and/or chrominance parameter deviated from the respective highlight threshold(s) by some specified amount, factor, etc. If the example decision unit 630 determines that the highlighted window detection criteria have been met (block 930), control proceeds to block 935 at which the example decision unit 630 indicates that the content window corresponding to the selected region of interest being processed is highlighted in the monitored multimedia presentation. Execution of the example machine readable instructions 815 then ends.

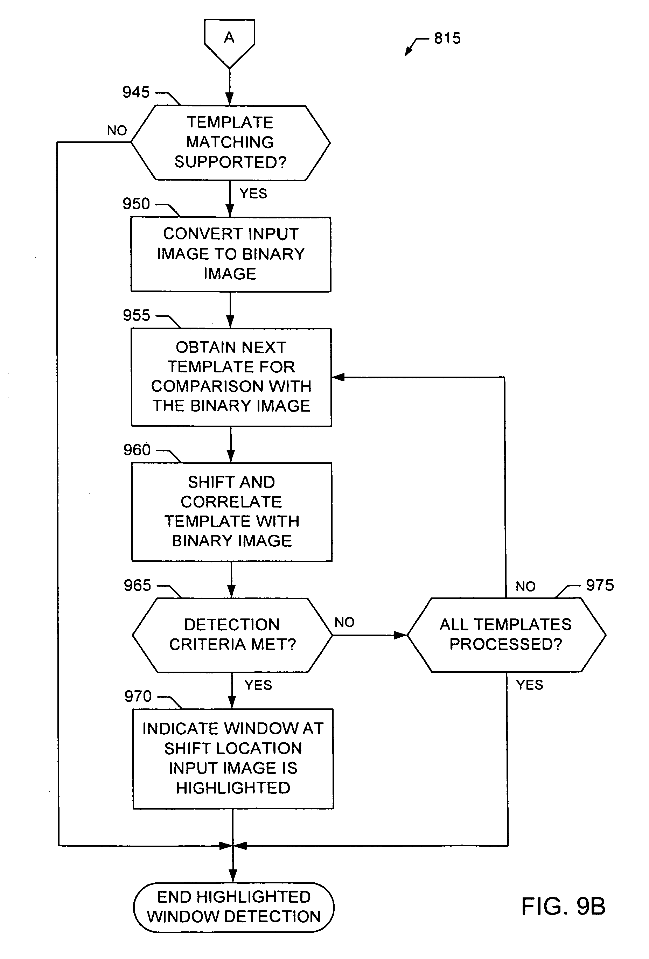

However, if the example decision unit 630 determines that the highlighted window detection criteria have not been met (block 930), control proceeds to block 940 at which the example region selector 605 included in the example highlighted window detector 220 determines whether all configured regions of interest have been processed. If all regions of interest have not been processed (block 940), control returns to block 915 and blocks subsequent thereto at which the example region selector 605 selects the next region of interest in the configured set of regions of interest for processing. If, however, all regions of interest have been processed (block 940), or if highlighted window detection based on region of interest matching is not supported (block 910), control proceeds to block 945 of FIG. 9B.

Turning to FIG. 9B, at block 945 the example highlighted window detector 220 determines whether highlighted window detection based on template matching is supported (e.g., based on configuration data maintained in the highlighted window detector 220 and/or monitoring unit 120). If highlighted window detection based on template matching is not supported (block 945), execution of the example machine readable instructions 815 ends. However, if highlighted window detection based on template matching is supported (block 945), control proceeds to block 950 at which the example binary image converter 620 included in the example highlighted window detector 220 converts the monitored image obtained at block 905 of FIG. 9A to a binary monitored image. For example, and as described in greater detail above, at block 950 the example binary image converter 620 uses a binary conversion threshold based on pixel luminance and/or chrominance values to convert grayscale or color pixels of the monitored image to respective binary pixels of the binary monitored image.

Next, control proceeds to block 955 at which the example template correlator 625 included in the example highlighted window detector 220 selects a template from a set of templates configured by, for example, execution of the example machine readable instructions 700 of FIG. 7. Control then proceeds to block 960 at which the example template correlator 625 shifts the selected template across a combination of horizontal shift positions and vertical shift positions covering some or all of the binary monitored image. As described above in greater detail, for each horizontal shift position and vertical shift position, the example template correlator 625 selects a respective region of the binary monitored image bounded by the template and correlates the selected region of the binary monitored image with the template to determine a correlation parameter value representative of the number of pixels in the selected region of the monitored image having luminance and/or chrominance values greater than or equal to the binary conversion threshold.

Next, control proceeds to block 965 at which the example decision unit 630 included in the example highlighted window detector 220 determines whether the correlation parameter value determined at block 925 by correlating the binary monitored image with the selected template at any horizontal shift position and vertical shift position indicates that highlighted window detection criteria have been met. For example, at block 965 the example decision unit 630 determines that the parameter value for the correlation of the monitored binary image and the selected template at a particular horizontal shift position and vertical shift position is indicative of a highlighted content window at that location of the monitored multimedia presentation if the correlation parameter value for that location is greater than or equal to a highlight threshold or, alternatively, deviates from the highlight threshold. Because the correlation parameter value determined at block 960 by correlating the selected template with the binary monitored image at particular shift position is representative of a number of pixels of the monitored image within the template region that had luminance values and/or chrominance values greater than or equal to the binary conversion threshold, the highlight threshold could be specified as a minimum number of pixels required to have luminance values and/or chrominance values greater than or equal to the binary conversion threshold for a region of the monitored image at a particular shift location to be determined to correspond to a highlighted content window.

If the example decision unit 630 determines that the highlighted window detection criteria have been met (block 965), control proceeds to block 970 at which the example decision unit 630 indicates that a highlighted content window is located at the particular horizontal and vertical shift positions that yielded a correlation parameter value meeting the detection criteria. Execution of the example machine readable instructions 815 then ends. However, if the example decision unit 630 determines that the highlighted window detection criteria have not been met (block 965), control proceeds to block 975 at which the example template correlator 625 included in the example highlighted window detector 220 determines whether all templates in the configured set of templates have been processed. If all templates have not been processed (block 975), control returns to block 955 and blocks subsequent thereto at which the next template from the configured templates is selected for use in processing the monitored binary image. If, however, all templates have been processed (block 975), execution of the example machine readable instructions 815 ends.

FIG. 10 is a block diagram of an example computer 1000 capable of implementing the apparatus and methods disclosed herein. The computer 1000 can be, for example, a server, a personal computer, a personal digital assistant (PDA), an Internet appliance, a DVD player, a CD player, a digital video recorder, a personal video recorder, a set top box, or any other type of computing device.

The system 1000 of the instant example includes a processor 1012 such as a general purpose programmable processor. The processor 1012 includes a local memory 1014, and executes coded instructions 1016 present in the local memory 1014 and/or in another memory device. The processor 1012 may execute, among other things, the machine readable instructions represented in FIGS. 7, 8 and/or 9A-9B. The processor 1012 may be any type of processing unit, such as one or more microprocessors from the Intel® Centrino® family of microprocessors, the Intel® Pentium® family of microprocessors, the Intel® Itanium® family of microprocessors, and/or the Intel XScale® family of processors. Of course, other processors from other families are also appropriate.

The processor 1012 is in communication with a main memory including a volatile memory 1018 and a non-volatile memory 1020 via a bus 1022. The volatile memory 1018 may be implemented by Static Random Access Memory (SRAM), Synchronous Dynamic Random Access Memory (SDRAM), Dynamic Random Access Memory (DRAM), RAMBUS Dynamic Random Access Memory (RDRAM) and/or any other type of random access memory device. The non-volatile memory 1020 may be implemented by flash memory and/or any other desired type of memory device. Access to the main memory 1018, 1020 is typically controlled by a memory controller (not shown).

The computer 1000 also includes an interface circuit 1024. The interface circuit 1024 may be implemented by any type of interface standard, such as an Ethernet interface, a universal serial bus (USB), and/or a third generation input/output (3GIO) interface.

One or more input devices 1026 are connected to the interface circuit 1024. The input device(s) 1026 permit a user to enter data and commands into the processor 1012. The input device(s) can be implemented by, for example, a keyboard, a mouse, a touchscreen, a track-pad, a trackball, an isopoint and/or a voice recognition system.

One or more output devices 1028 are also connected to the interface circuit 1024. The output devices 1028 can be implemented, for example, by display devices (e.g., a liquid crystal display, a cathode ray tube display (CRT)), by a printer and/or by speakers. The interface circuit 1024, thus, typically includes a graphics driver card.

The interface circuit 1024 also includes a communication device such as a modem or network interface card to facilitate exchange of data with external computers via a network (e.g., an Ethernet connection, a digital subscriber line (DSL), a telephone line, coaxial cable, a cellular telephone system, etc.).

The computer 1000 also includes one or more mass storage devices 1030 for storing software and data. Examples of such mass storage devices 1030 include floppy disk drives, hard drive disks, compact disk drives and digital versatile disk (DVD) drives. The mass storage device 1030 may implement the example monitored data storage unit 218 and/or the example configuration data storage unit 235. Additionally or alternatively, the volatile memory 1018 may implement the example monitored data storage unit 218 and/or the example configuration data storage unit 235. Additionally or alternatively, the non-volatile memory 1020 may implement the example configuration data storage unit 235.

As an alternative to implementing the methods and/or apparatus described herein in a system such as the device of FIG. 10, the methods and or apparatus described herein may be embedded in a structure such as a processor and/or an ASIC (application specific integrated circuit).

Finally, although certain example methods, apparatus and articles of manufacture have been described herein, the scope of coverage of this patent is not limited thereto. On the contrary, this patent covers all methods, apparatus and articles of manufacture fairly falling within the scope of the appended claims either literally or under the doctrine of equivalents.

## Claims

1. A method to monitor a media device providing a media presentation capable of including a plurality of content windows, the method comprising:
obtaining a monitored image corresponding to the media presentation provided by the media device;
determining a first parameter value representative of at least one of a luminance or a chrominance of a first region in the monitored image, a shape of the first region representative of at least one of the plurality of content windows; and
comparing the first parameter value to a highlight threshold to determine whether a first content window associated with a location of the first region in the monitored image is highlighted.

2. A method as defined in claim 1 further comprising at least one of capturing the monitored image from a camera positioned to view the media presentation provided by the media device, or processing a video signal output by the media device to obtain the monitored image.

3. A method as defined in claim 1 further comprising selecting the first region to correspond to one of a plurality of predetermined regions of interest, each predetermined region of interest corresponding to a respective content window in the plurality of content windows.

4. A method as defined in claim 1 further comprising:
shifting a template representative of at least one of the plurality of content windows across a plurality of horizontal shift positions and a plurality of vertical shift positions of the monitored image; and
selecting the first region to correspond to an area of the monitored image bounded by the template and located at a first horizontal shift position and a first vertical shift position of the template.

5. A method as defined in claim 4 further comprising:
performing a binary conversion of an input image to determine the monitored image, the binary conversion performed using a binary conversion threshold to convert at least one of grayscale or color pixels of the input image to respective binary pixels of the monitored image; and
correlating the first region with the template to determine the first parameter value.

6. A method as defined in claim 5 wherein the binary conversion threshold corresponds to at least one of a pixel luminance value or a pixel chrominance value associated with human-perceivable highlighting of one of the plurality of content windows.

7. A method as defined in claim 6 wherein the highlight threshold corresponds to a minimum number of pixels in the first region required to have at least one of pixel luminance values or pixel chrominance values greater than or equal to the binary conversion threshold for the first region to be determined to correspond to a highlighted content window.

8. A method as defined in claim 4 further comprising, when the first parameter value is greater than or equal to the highlight threshold, indicating that the first content window is highlighted and located at the first horizontal shift position and the first vertical shift position.

9. A method as defined in claim 1 wherein the highlight threshold corresponds to at least one of a luminance or a chrominance associated with human-perceivable highlighting of at least one of the plurality of content windows.

10. A method as defined in claim 1 further comprising, when the first parameter value is greater than or equal to the highlight threshold, indicating that the first content window associated with the location of the first region is highlighted.

11. A method as defined in claim 1 further comprising, when the first parameter value is greater than or equal to the highlight threshold, indicating that the media device is tuned to a first channel from a plurality of tunable channels, the first channel configured to provide content capable of being presented using the plurality of content windows.

12. A method as defined in claim 1 further comprising, when the first parameter value is greater than or equal to the highlight threshold, performing optical character recognition in the first region of the monitored image to identify first content presented in the first content window, the first content being different from second content presented in a second content window included in the media presentation.

13. A method as defined in claim 1 further comprising, when the first parameter value is greater than or equal to the highlight threshold, processing at least one of an audio signal or a video signal provided by the media device to identify first content presented in the first content window, the first content being different from second content presented in a second content window included in the media presentation.

14. A method as defined in claim 1 wherein the plurality of content windows are mapped to a respective plurality of content sources, and further comprising, when the first parameter value is greater than or equal to the highlight threshold, identifying first content presented in the first content window as corresponding to a first content source mapped to the first content window, the first content being different from second content presented in a second content window included in the media presentation.

15. A method as defined in claim 1 further comprising, when the first parameter value is less than the highlight threshold:
determining a second parameter value representative of at least one of a luminance or a chrominance of a second region in the monitored image, a shape of the second region representative of at least one of the plurality of content windows; and
comparing the second parameter value to the highlight threshold to determine whether a second content window associated with a location of the second region in the monitored image is highlighted.

16. A machine readable article of manufacture storing machine readable instructions which, when executed, cause a machine to:
obtain a monitored image corresponding to a media presentation provided by a media device, the media presentation capable of including a plurality of content windows;
determine a first parameter value representative of at least one of a luminance or a chrominance of a first region in the monitored image, a shape of the first region representative of at least one of the plurality of content windows; and
compare the first parameter value to a highlight threshold to determine whether a first content window associated with a location of the first region in the monitored image is highlighted.

17. An article of manufacture as defined in claim 16 wherein the machine readable instructions, when executed, further cause the machine to select the first region to correspond to one of a plurality of predetermined regions of interest, each predetermined region of interest corresponding to a respective content window in the plurality of content windows.

18. An article of manufacture as defined in claim 16 wherein the machine readable instructions, when executed, further cause the machine to:
convert the monitored image to a binary monitored image using a binary conversion threshold to convert at least one of grayscale or color pixels of the monitored image to respective binary pixels of the binary monitored image, the binary conversion threshold corresponding to at least one of a pixel luminance value or a pixel chrominance value associated with human-perceivable highlighting of one of the plurality of content windows;
shift a template representative of at least one of the plurality of content windows across a plurality of horizontal shift positions and a plurality of vertical shift positions of the binary monitored image;
select the first region to correspond to an area of the binary monitored image bounded by the template and located at a first horizontal shift position and a first vertical shift position of the template; and
correlate the first region with the template to determine the first parameter value.

19. An article of manufacture as defined in claim 16 wherein the machine readable instructions, when executed, further cause the machine to indicate that the media device is tuned to a first channel from a plurality of tunable channels when the first content window is determined to be highlighted, the first channel configured to provide content capable of being presented using the plurality of content windows.

20. An article of manufacture as defined in claim 16 wherein the machine readable instructions, when executed, further cause the machine to identify first content presented in the first content window when the first content window is determined to be highlighted, the first content being different from second content presented in a second content window included in the media presentation, the machine to identify the first content by at least one of:
performing optical character recognition in the first region of the monitored image;
processing at least one of an audio signal or a video signal provided by the media device; or
associating the first content with a first content source mapped to the first content window, the plurality of content windows being mapped to a respective plurality of content sources.

21. A media device monitoring unit comprising:
a video interface communicatively coupled to at least one of a camera or a video output of a media device to obtain a monitored image corresponding to a media presentation provided by the media device, the media device capable of including a plurality of content windows in the media presentation;
a highlighted window detector communicatively coupled to the video interface, the highlighted window detector to:
determine a first parameter value representative of at least one of a luminance or a chrominance of a first region in the monitored image, a shape of the first region representative of at least one of the plurality of content windows; and
compare the first parameter value to a highlight threshold to determine whether a first content window associated with a location of the first region in the monitored image is highlighted; and
a configuration interface to specify at least one of a template corresponding to a shape of at least one of the plurality of content windows or a plurality of regions of interest corresponding respectively to the plurality of content windows, the highlighted window detector to determine the first region in the monitored image using at least one of the template or the plurality of regions of interest.

22. A monitoring unit as defined in claim 21 wherein the highlighted window detector comprises:
a binary image converter to convert the monitored image to a binary monitored image using a binary conversion threshold to convert at least one of grayscale or color pixels of the monitored image to respective binary pixels of the binary monitored image, the binary conversion threshold corresponding to a pixel luminance value associated with human-perceivable highlighting of one of the plurality of content windows; and
a template correlator to:
shift the template specified by the configuration interface across a plurality of horizontal shift positions and a plurality of vertical shift positions of the binary monitored image;
select the first region to correspond to an area of the binary monitored image bounded by the template and located at a first horizontal shift position and a first vertical shift position of the template; and
correlate the first region with the template to determine the first parameter value; and
a decision unit to indicate that the first content window is highlighted and located at the first horizontal shift position and the first vertical shift position when the first parameter value is greater than or equal to the highlight threshold.

23. A monitoring unit as defined in claim 21 wherein the highlighted window detector comprises:
a region selector select the first region in the monitored image to correspond to a first region of interest from the plurality of regions of interest specified by the configuration interface; and
a luminance comparator to:
determine the first parameter value to be representative of the luminance of the first region in the monitored image; and
compare the first parameter value to the highlight threshold, the highlight threshold corresponding to a luminance associated with human-perceivable highlighting of at least one of the plurality of content windows; and
a decision unit to determine whether the first content window associated with the first region of interest is highlighted based on comparing the first parameter value to the highlight threshold.

24. A monitoring unit as defined in claim 21 further comprising a channel detector communicatively coupled to the highlighted window detector, the channel detector to indicate that the media device is tuned to a first channel from a plurality of tunable channels when the highlighted window detector detects that the first content window is highlighted, the first channel configured to provide content capable of being presented using the plurality of content windows.

25. A monitoring unit as defined in claim 21 further comprising a content identifier communicatively coupled to the highlighted window detector, the content identifier to identify first content presented in the first content window when the highlighted window detector detects that the first content window is highlighted, the first content being different from second content presented in a second content window included in the media presentation.
